# EUROPEAN PATENT APPLICATION

(11) **EP 4 632 253 A1**
(43) Date of publication of application: **15.10.2025**
(21) Application number: 25166281.3
(22) Date of filing: 26.03.2025
(51) Int. Cl.: F16K 5/04, F16K 27/06

(54) **VALE FOR IRRIGATION SYSTEM COMPRISING AN IMPROVED MOBILE ORGAN**

(30) Priority: 09.04.2024 IT 202400001543 U
(71) Applicant: SAB S.p.A., 61048 Sant'Angelo in Vado (PU) (IT)
(72) Inventor: MANCINI CILLA, Renato, 61023 MACERATA FELTRIA (PU) (IT)
(74) Representative: Baldi, Claudio

(57) **Abstract**

A valve (100) for an irrigation system comprises a fixed organ (1) comprising a box body (10) defining a seat (10a) and at least two nozzles (11) protruding from the box body (10) and ending into the seat (10a) of the box body (10) through a hole (11a), a mobile organ (2) that is rotatably mounted with respect to the seat (10a) of the box body (10) around an axis of rotation (Y) and comprises a plug (3) arranged inside the seat (10); the peculiarity of the valve (100) is that said plug (3) comprises a supporting body (4) made of rigid material, and at least one sealing insert (5) made of soft material, immovably attached to the supporting body (4), suitable for sealing the hole (11a) of at least one of the two nozzles (11) when the mobile organ (2) is in closed position.

## Description

This patent application for industrial invention relates to an irrigation system valve comprising an improved mobile organ.

As it is well known, the metered irrigation systems that are currently available on the market are used to irrigate plots of land in a slow, gradual way so that the plants are continuously fed with such water without any waste.

Among the most well-known irrigation systems are the systems commonly referred to as micro-irrigation systems or drip irrigation systems and dripping hose systems.

Both the aforementioned systems take advantage of a line pipe that is fed by a water source and whereon small holes or dripping devices are provided to let out water drops to feed the plants.

A valve is arranged between the water source and the line pipe, which is technically known as an "irrigation valve" comprising:
- a fixed organ having a central cylindrical box body and two nozzles radially protruding from the box body whereon an inlet pipe and the aforementioned line pipe are attached, respectively; and
- a mobile organ that is rotatably mounted with respect to the cylindrical central box body and comprises a gripping knob and a plug with an essentially cylindrical shape that is arranged inside the cylindrical central box body.

By manually operating the gripping knob, it is possible to position the mobile organ between a closed position, wherein the plug prevents the water from the source from flowing to the line pipe, and an open position, wherein the plug allows the water from the source to flow to the line pipe.

The mobile organ is made in one piece by molding a rigid plastic material, such as polypropylene.

Despite their wide use in agriculture such valves of the prior art are not reliable because, when the mobile organ is in closed position, the water will still pass through the valve to flow to the line pipe.

In order to overcome such an issue said valves have been equipped with rubber seals that can be mounted/removed onto/from the plug to ensure a more watertight closure of the valve.

Nevertheless, even such a solution did not prove to be entirely satisfactory in that such seals tend to be displaced due to the movements of the valve between the open position and the closed position, thus impairing the efficacy and reliability of the valve.

The purpose of the present invention is to overcome the drawbacks of the prior art by devising a new valve comprising an improved mobile organ that is efficient, reliable and inexpensive to produce.

Such a purpose is achieved in accordance with the invention with the features listed in the attached independent claim 1.

Advantageous embodiments appear from the dependent claims.

The valve according to the invention is defined by claim 1.

For the sake of explanatory clarity, the description of the valve according to the invention continues with reference to the attached drawings, which are for illustrative and non-limiting purposes only, wherein:
Fig. 1 is an axonometric view of a valve according to the invention;
Fig. 2 is an axonometric view of the valve according to the invention wherein the parts of the valve are disassembled from each other;
Fig. 3 is a top view of the mobile body of the valve according to the invention;
Fig. 4 is a sectional view of the mobile body of Fig. 3 taken along the IV-IV plane of Fig.3;
Fig. 5 is a top view of the valve according to the invention with the mobile body of the valve in closed position;
Fig. 6 is a sectional view of the valve of Fig. 5 taken along the VI-VI plane of Fig. 5;
Fig. 7 is a top view of the valve according to the invention with the mobile body of the valve in open position;
Fig. 8 is a sectional view of the valve of Fig. 7 taken along the VIII-VIII plane of Fig. 7.

With reference to the attached figures, a valve according to the invention is described, which is comprehensively indicated with reference numeral 100.

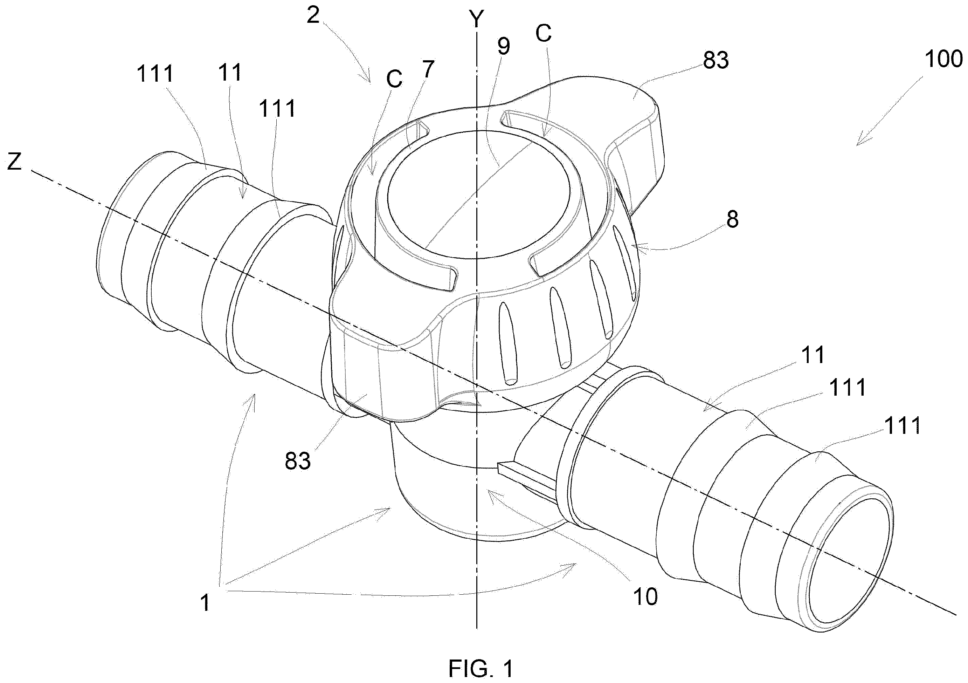

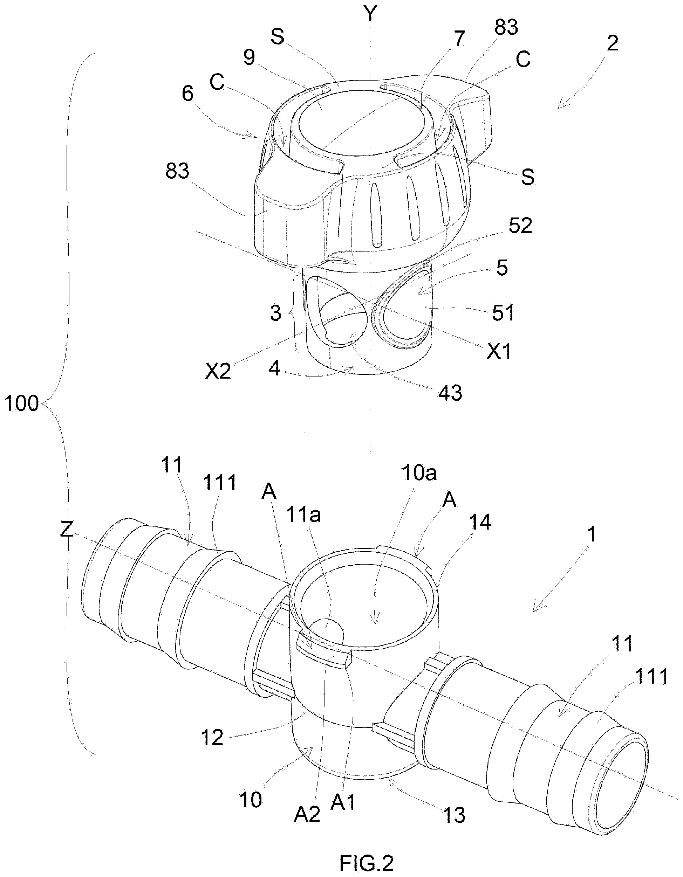

With reference to Figs. 1 and 2, the valve (100) comprises a fixed organ (1) comprising a box body (10) defining an internal seat (10a) and two nozzles (11) protruding from the box body (10) and ending into the seat (10a) of the box body (10) through a hole (11a).

The box body (10) is cylindrical and comprises a side wall (12) on which said holes (11a) are formed and from which said nozzles (11) branch off, a bottom (13) and a circular upper edge (14) that defines an upper opening that provides access to said seat (10a) of the box body (10).

The two nozzles (11) protrude radially from the side wall (12) of the box body (10) and are aligned with each other along an axis (Z).

Two pipes are suitable for being coupled on the two nozzles (11), namely an inlet pipe and a line pipe of an irrigation system.

Preferably, annular ribs (111) are formed around the nozzles (11) to favor the coupling by interference of each nozzle (11) with its respective pipe.

The box body (10) of the fixed organ (1) comprises two locking wings (A) that protrude externally from the box body (10) and are arranged near the upper circular edge (14) of the box body (10). Each locking wing (A) has a lower face (A1) facing the bottom (13) of the box body (10), as well as an upper face (A2) opposite to said lower face (A1), which is inclined and sloping downward. The function of the two locking wings (A) will become clearer as the description continues.

With reference to Figs. 1, 2, 3 and 4, the valve (100) also comprises a mobile organ (2) that is rotatably mounted with respect to the seat (10a) of the box body (10) around an axis of rotation (Y) perpendicular to the axis (Z) of alignment of the two nozzles (11).

The mobile organ (2) comprises a plug (3) arranged inside the seat (10a) of the box body (10) and a gripping knob (6) that is integral with the plug (3) and protrudes from the seat (10a) of the box body (10) of the fixed organ (1). The gripping knob (6) is configured to be gripped by a user so that the user can manually move the mobile organ (2).

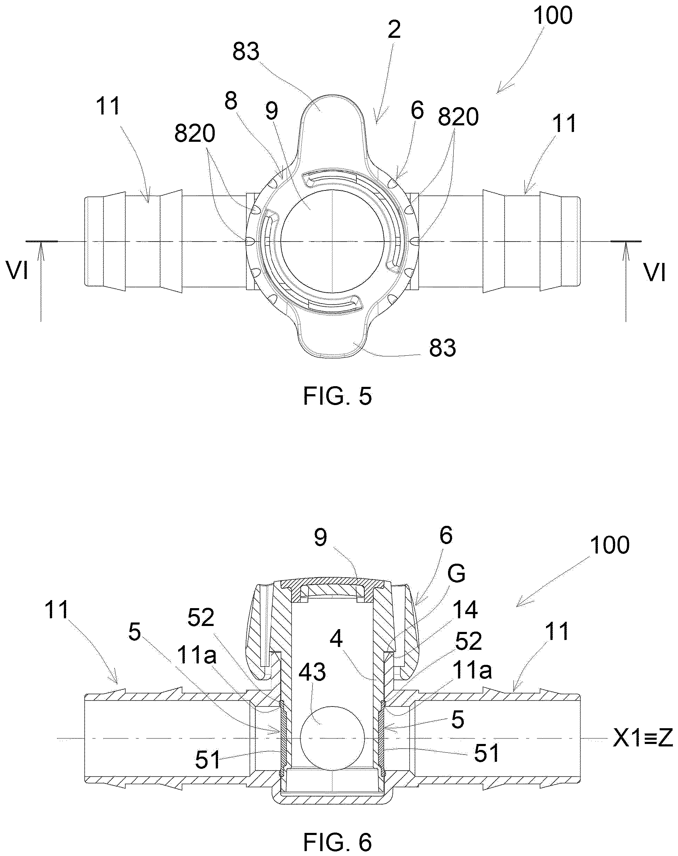

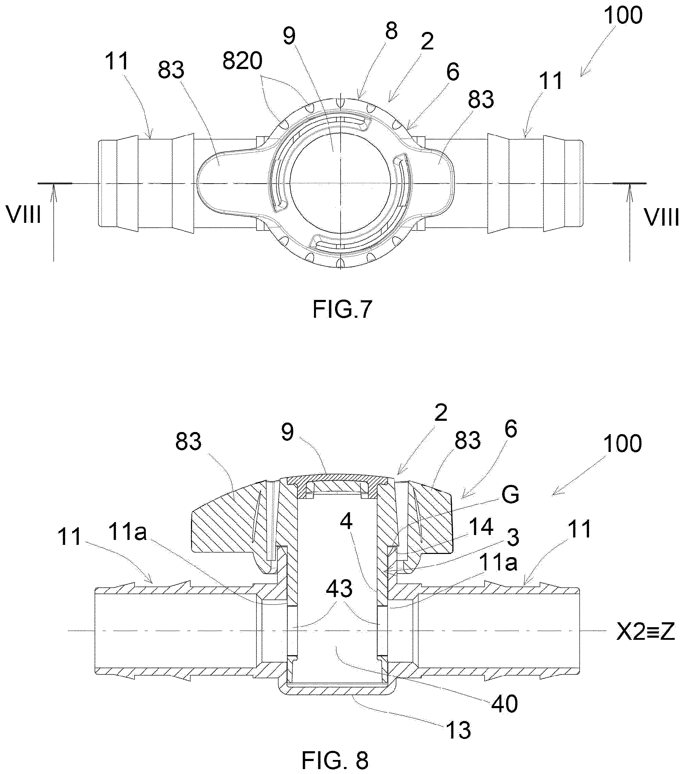

The mobile organ (2) is rotatably mounted with respect to the seat (10a) in such a way to be disposed:
- in a closed position, as shown in Figs. 5 and 6, wherein the plug (3) does not provide communication between the two nozzles (11) of the fixed organ (1), and
- in an open position, as shown in Figs. 7 and 8, wherein the plug (3) provides communication between the two nozzles (11) of the fixed organ (1).

The plug (3) comprises:
- a supporting body (4) with cylindrical shape made of rigid material, and
- at least one sealing insert (5) made of soft material, immovably attached to the supporting body (4), suitable for sealing the hole (11a) of at least one of the two nozzles (11) when the mobile organ (2) is in closed position.

Preferably, the supporting body (4) made of rigid material and the sealing insert (5) made of soft material are co-molded together.

The rigid material used for the supporting body (4) of the plug (3) is a plastic material that belongs to the class of polyolefins. Specifically, the rigid material used for the supporting body (4) of the plug (3) is polypropylene.

The soft material used for the sealing insert (5) of the plug (3) is a thermoplastic elastomer.

The cylindrical supporting body (4) has an outer face (42) to which the sealing insert (5) is attached.

**In** particular, two sealing inserts (5) aligned with each other along a first diametral axis (X1) of the supporting body (4) of the plug (3) are fixed on the outer face (42) of the supporting body (4). Specifically, the sealing inserts (5) are arranged on respective low-relief seats formed on the outer face (42) of the supporting body (4). Each of said two sealing inserts (5) is suitable for sealing the hole (11a) of a respective nozzle (11) of the fixed organ (1) when the mobile organ (2) is in closed position.

In addition, the supporting body (4) has a passageway suitable for putting the two nozzles (11) in communication with each other when the mobile organ (2) is in open position.

More precisely, said cylindrical supporting body (4) is internally hollow and defines an internal cavity (40). The supporting body (4) has two openings (43) aligned with each other along a second diametral axis (X2) of the supporting body (4) of the plug (3). The openings (43) and the cavity (40) define the passageway that puts the two nozzles (11) in communication with each other when the mobile organ (2) is in open position.

The first diametral axis (X1) and the second diametral axis (X2) are perpendicular to each other.

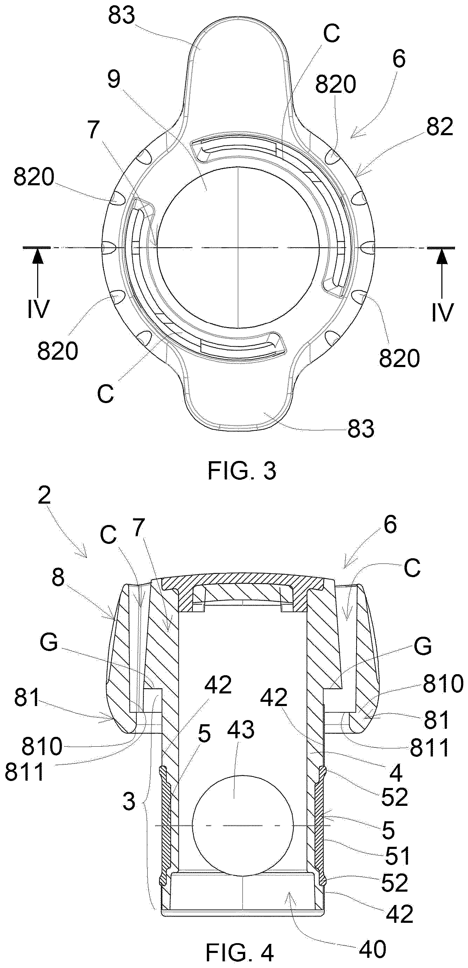

With particular reference to Figs. 2 and 4, each sealing insert (5) comprises a central plate-like portion (51) and a perimeter lip (52) that protrudes from the central plate-like portion (51) and is suitable for adhering to the perimeter edge of the hole (11a) of the nozzle (11) when the mobile organ (2) is in closed position.

So, when the mobile organ (2) is in closed position, the perimeter lip (52) of the sealing insert (5) adheres to the perimeter edge of the hole (11a) tightly closing the hole (11a), as shown in Fig. 6. In addition, when the mobile organ (2) is in closed position, the first diametral axis (X1) is aligned with the axis (Z) of alignment of the two nozzles (11) of the fixed organ (1).

When the mobile organ (2) is in open position, each opening (43) of the plug (4) of the mobile organ (2) is facing a respective hole (11a) of one of the two nozzles (11). In this way, the passageway defined by the openings (43) and by the cavity (40) puts the two nozzles (11) in communication with each other, thus allowing liquids to flow between the two nozzles (11).

Referring to Figs. 2, 3 and 4, the gripping knob (6) comprises:
- a central body (7) connected to the supporting body of the plug (3);
- a perimeter collar (8) extending all around the central body (7); and
- two connection partitions (S) that connect the central body (7) and the perimeter collar (8) and define two slots (C) that extend along circumferential arcs between the perimeter collar (8) and the central body (7).

The supporting body (4) of the plug (3), the central body (7), the connection partitions (S) and the perimeter collar (8) are made in one piece from the same material. More precisely, said parts are made in one monolithic piece by molding polypropylene.

So, the supporting body (4) of the plug (3), the central body (7), the connection partitions (S) and the perimeter collar (8) define a single rigid structure of the mobile organ (2).

With reference to Fig. 4, the central body (7) of the gripping knob (6) consists of an enlarged extension of the supporting body (4) of the plug (3) and is connected to the supporting body (4) of the plug (3) by an annular step (G) suitable for abutting against the circular upper edge (14) of the box body (10) of the fixed organ (1). It can otherwise be said that the central body (7) is configured as a bulb or enlarged head of the plug (3).

Referring to Fig. 4, the perimeter collar (8) comprises a lower section (81) that extends below the annular step (G) and has an annular border (810) that protrudes toward the plug (3) of the mobile organ (2). Said annular border (810) comprises an upper surface (811) which is suitable for interfering with the lower face (A1) of the locking wing (A) to prevent the uncoupling of the mobile organ (2) from the fixed organ (1).

The perimeter collar (8) or only its lower section (81) is elastically deformable in the radial direction so that, during the first assembly of the mobile organ (2) to the fixed organ (1), the perimeter collar (8) can spread apart, allowing the annular border (810) of the lower section (81) of the perimeter collar (8) to override the locking wings (A), arranging itself under the lower face (A1) of the locking wings (A).

More precisely, during the first assembly, the mobile organ (2) is energetically pushed toward the seat (10a) of the box body (10) so that the annular border (810) of the lower section (81) of the perimeter collar (8) can interfere with the locking wings (A), elastically spread apart and override said locking wings (A) and then resume its initial configuration due to the elastic return so as to be disposed under said locking wings (A) with the upper surface (811) in contact with the lower face (A1) of the locking wings (A).

The spreading of the annular border (810) of the lower section (81) of the perimeter collar (8) is also favored due to the upper faces (A2) of the locking wings (A) against which the annular border (810) interferes during the first assembly of the mobile organ (2) with the fixed organ (1).

Referring to Fig. 3, the perimeter collar (8) comprises two radial gripping projections (83).

In addition, the perimeter collar (8) has an outer surface (82) whereon a plurality of notches (820) is formed.

The radial gripping projections (83) and the notches (820) make it easier for the user to grab the mobile organ (2) when the user wants to move the mobile organ (2) between the open position and the closed position.

Going now to Fig. 3, an insert (9) made of soft material is provided on an upper face of the central body (7), which is immovably attached to said central body (7). Preferably, the insert (9) and the central body (7) are co-molded with each other.

When seen in a top view, the insert (9) has a circular shape and is positioned in the center of the central body (7).

The insert (9) is made of the same material as the sealing insert (5). So the insert (9) is made from a thermoplastic elastomer.

The insert (9) distinguishes the valve (100) according to the invention from the valves of the prior art that are aesthetically similar, but lack the aforementioned sealing inserts (5).

In fact, when the valve (100) is assembled and installed in an irrigation system, it is not possible to identify the two sealing inserts (5) because the plug (3) is located inside the box body (10) of the fixed organ (1). Therefore, thanks to the fact that the insert (9) is visible from the outside, the user can immediately identify that the valve (100) is the valve according to the present invention, i.e., it is provided with the mobile organ (2) equipped with the sealing inserts (5).

As a result of the foregoing description, it is apparent that the present invention achieves all of its stated purposes.

In fact, the new valve (100) with the mobile organ (2) equipped with the sealing inserts (5) that are co-molded with the supporting body (4) of the plug (3) is more reliable and efficient than the valves of the prior art.

In addition, it should be pointed out that the new valve (100) of the invention has a rather low cost and a rather solid structure that certainly ensures a long operational life.

Numerous variations and changes of detail may be made to the present embodiment of the invention, within the reach of a technician of the field, but still falling within the scope of the invention as expressed by the appended claims.

## Claims

1. Valve (100) for irrigation system comprising:
- a fixed organ (1) comprising a box body (10) defining an internal seat (10a) and at least two nozzles (11) protruding from the box body (10) and ending into the seat (10a) of the box body (10) through a hole (11a);
- a mobile organ (2) that is rotatably mounted with respect to the seat (10a) of the box body (10) around an axis of rotation (Y) and comprises a plug (3) arranged inside the seat (10); wherein said mobile organ (2) is rotatably mounted with respect to the seat (10a) between a closed position, wherein the plug (3) does not provide communication between the two nozzles (11) of the fixed organ (1), and an open position, wherein the plug (3) provides communication between the two nozzles (11) of the fixed organ (1);
**characterized by** the fact that said plug (3) comprises:
- a supporting body (4) made of rigid material, and
- at least one sealing insert (5) made of soft material, immovably attached to the supporting body (4), suitable for sealing the hole (11a) of at least one of the two nozzles (11) when the mobile organ (2) is in closed position.

2. The valve (100) according to claim 1, wherein said supporting body (4) and said sealing insert (5) are co-molded together.

3. The valve (100) according to claim 1 or 2, wherein said supporting body (4) of the plug (3) is made of a plastic material of the class of polyolefin.

4. The valve (100) according to claim 3, wherein said supporting body (4) is made of polypropylene.

5. The valve (100) according to any one of the preceding claims, wherein said sealing insert (5) is made of a thermoplastic elastomer.

6. The valve (100) according to any one of the preceding claims, wherein said sealing insert (5) comprises a central plate-like portion (51) and a perimeter lip (52) that protrudes from the central plate-like portion (51) and is suitable for adhering to the perimeter edge of the hole (11a) of the nozzle (11) when the mobile organ (2) is in closed position.

7. The valve (100) according to any one of the preceding claims, wherein said plug (3) comprises two sealing inserts (5), each being suitable for sealing the hole (11a) of a respective nozzle (11) of the fixed organ (1) when the mobile organ (2) is in closed position.

8. The valve (100) according to any one of the preceding claims, wherein said box body (10) is cylindrical and comprises a side wall (12) on which said nozzles (11) are formed, a bottom (13) and a circular upper edge (14) defining an upper opening that provides access to said seat (10a) of the box body (10); the supporting body (4) of the plug (3) is cylindrical and has an outer face (42) to which said at least one sealing insert (5) is attached; wherein said cylindrical supporting body (4) of the plug has a passageway suitable for putting the two nozzles (11) in communication with each other when the mobile organ (2) is in open position.

9. The valve (100) according to claim 8, wherein said supporting body (4) is internally hollow and has a cavity (40); wherein said supporting body (4) has two openings (43); wherein said cavity (40) and said two openings (43) define said passageway that puts the two nozzles (11) in communication with each other when the mobile organ (2) is in open position.

10. The valve (100) according to any one of the preceding claims, wherein said nozzles (11) are aligned with each other along an axis (Z).

11. The valve (100) according to claim 7, 9 and 10, wherein said two sealing inserts (5) are aligned with each other along a first diametral axis (X1) of the supporting body (4) of the plug (3); wherein said openings (43) are aligned along a second diametral axis (X2) of the supporting body (4) of the plug (3) perpendicular to the first diametral axis (X1).

12. The valve (100) according to any one of the preceding claims, wherein said mobile organ (2) comprises a gripping knob (6) integral with the plug (3) which protrudes from the seat (10a) of the box body (10) of the fixed organ (1) and which is configured to be gripped by a user.

13. The valve (100) according to claim 12, wherein said gripping knob (6) comprises:
- a central body (7) connected to the supporting body (4) of the plug (3);
- a perimeter collar (8) extending all around the central body (7); and
- connection partitions (S) that connect the central body (7) and the perimeter collar (8) and define slots (C) that extend along circumferential arcs between the perimeter collar (8) and the central body (7).

14. The valve (100) according to claim 13, wherein said perimeter collar (8) comprises an outer surface (82) whereon a plurality of notches (820) and at least one radial gripping projection (83) are formed.

15. The valve (100) according to claim 13 or 14, wherein an insert (9) made of soft material is provided on an upper face of the central body (7) of the gripping knob (6); wherein said insert (9) is immovably attached to said central body (7); wherein said insert (9) is made of the same material as the sealing insert (5).
